# EUROPEAN PATENT SPECIFICATION

(11) **EP 3 969 427 B1**
(45) Date of publication and mention of the grant of the patent: **08.04.2026**
(21) Application number: 20702337.5
(22) Date of filing: 05.02.2020
(51) Int. Cl.: C04B 28/02, C04B 28/04, C04B 28/06, C04B 28/14, C04B 28/18, C04B 28/24, C04B 38/08, B28B 1/00, B33Y 10/00, B33Y 30/00, B33Y 80/00

(54) **AEROGEL- AND/OR XEROGEL-BASED MASS FOR ADVANCED MANUFACTURING AND USE THEREOF**
AUF AEROGEL- UND / ODER XEROGEL BASIERENDE MASSE ZUR FORTSCHRITTLICHEN HERSTELLUNG UND VERWENDUNG DAVON
MASSE À BASE D'AÉROGEL ET/OU DE XÉROGEL POUR FABRICATION AVANCÉE ET SON UTILISATION

(30) Priority: 14.05.2019 EP 19174367
(43) Date of publication of application: 23.03.2022
(73) Proprietor: ETH Zürich, 8092 Zürich (CH)
(72) Inventor: SANZ PONT, Daniel, 8804 Au (CH); FLATT, Robert, 8706 Feldmeilen (CH)
(74) Representative: Keller Schneider Patent- und Markenanwälte AG
(86) International application number: PCT/EP2020/052861
(87) International publication number: WO 2020/228998

(56) References cited:
- WO-A1-2010/126792
- WO-A1-2016/191534
- WO-A2-2011/066209
- DE-A1- 102017 119 087
- US-A- 5 948 314
- BERTINO M F ED - RIBEIRO SIDNEY J L ET AL: "Rapid fabrication of hybrid aerogels and 3D printed porous materials", JOURNAL OF SOL-GEL SCIENCE AND TECHNOLOGY, SPRINGER, NEW YORK, NY, US, vol. 86, no. 2, 9 April 2018 (2018-04-09), pages 239 - 254, XP036489812, ISSN: 0928-0707, [retrieved on 20180409], DOI: 10.1007/S10971-018-4649-3

## Description

### Technical field

The invention relates to a high-porosity material-based composition, in particular for use as a printable and/or extrudable mass. Additionally, the invention is concerned with a workable composition, a hardened composition and a composite element produced from the high-porosity material-based composition. Further aspects of the invention are related to a method for producing a shaped body from the high-porosity material-based composition as well as the use of the high-porosity material-based composition as a printable mass in additive manufacturing, for digital casting, for producing a covering on a surface with a spray application technique, and/or as an extrudable mass for producing a shaped body by extrusion.

### Background art

The building sector is responsible for around 36% of CO₂ emissions and 40% of the energy use in Europe. Several countries have developed strategies to lower energy consumption. One focus is the promotion of energy efficiency in buildings. The main aim thereby is to reduce the energy consumption and CO₂ emissions considerably in order to reach zero-energy buildings. Such a scenario requires an optimal use of energy resources and a further improvement of the properties of the thermally insulating layers or envelopes of buildings. The insulation materials on the market typically achieve thermal conductivity values (λ) of not less than 28 mW/(m·K), especially when inorganic binders are employed, a limitation linked to the additional need to meet mechanical requirements like mechanical strength.

A frequently encountered challenge in many applications is that non-standard shapes of the insulating elements are needed. In architecture, this includes complex curved walls that can, for example, be designed by computer algorithms to find the optimum solution for each surface, with regard to structures, shading elements, and other aspects. With the existing traditional construction technologies, such solutions are highly expensive, due to the costs of tailored molds and complex building processes. The problem is more intricate when multilayer elements are required, in order to include for example thermal and acoustic insulation or fire protection. Thus, digital technologies present an interesting potential of addressing these limitations in a cost-efficient way.

Besides architecture, thermal insulation is required in many other technical systems, such as pipe insulation of heating systems as well as cooling distribution systems. Another technology field in which functional layers are required, are elements, such as smart floors or advanced flooring systems, in which various utilities are embedded. Limited space for thermal insulation and complex shapes requirements are also a problem in automotive technology, for example in internal combustion engines placed next to heat-sensitive components like sensors or batteries. Similar requirements and limitations can be found in household equipment like for example electronic coffee machines and ovens. Other fields of application that deal with space limitations for thermal insulation and possibly also shape complexity may include aircrafts, aerospace or other conveyances and refrigeration.

All these applications can benefit from ultra-high performance thermal insulating materials. In this regard, aerogel-based composites have a high potential since aerogels represent a class of ultralight and thermally insulating materials. They also have an extremely high porosity which makes them particularly light weight.

The use of aerogels in architecture and construction is known from several publications. For example, WO 2014/090790 shows a dry blend for producing a thermally insulating rendering with 60 - 90 vol.-% of hydrophobized granular silica aerogel and 0.5 - 30 vol.-% of a purely mineral binder. The WO 2013/043882 shows a wallboard that includes an aerogel dispersed in a gypsum dihydrate. WO 2011/083174 describes a plaster containing aerogel to apply to a building surface to produce a thermally insulating coating. WO 2010/126792, as well as US 6080475, show a composition including aerogel for low thermal conductivity, too. EP 2 142 718 B1 shows a tensioned multilayer architectural membrane structure comprising an aerogel, wherein the aerogel component represents one layer between at least two other layers of the membrane.

The disadvantage of the solutions described in these documents with regard to applications in architecture is that they are not suitable for producing free-forms and complex shapes, in addition to remaining limited by the combination of the material thermal insulation and strength.

At present, there is a high motivation for developing advanced manufacturing techniques. Advanced manufacturing techniques in particular include digital fabrication and additive manufacturing. Thereby, additive manufacturing methods turned out to be highly promising and advantageous.

"Digital fabrication" are meant to be techniques which make use of controlled, especially digitally controlled, set-on-demand processes for placing hardenable or curable building materials, such as e.g. mortar or concrete compositions. This includes in particular the control of the placing of the hardenable or curable building material depending on the strength evolution of the hardenable or curable building material, the object to be produced with the hardenable or curable building material and/or the formwork used during production. Especially, the placing is controlled based on a data model of the object to be produced.

For example, in "digital casting", hardenable or curable building materials, such as e.g. mortar or concrete compositions, are casted in a formwork. Thereby, the structure of the formwork and/or the position of the formwork are chosen depending on the delivery rate of the hardenable or curable building material, the strength evolution of the hardenable or curable building material and/or the object to be produced. Preferably, in digital casting, the process is controlled, especially digitally controlled, based on a data model of the object to be produced and/or based on a data model of the formwork.

The term "additive manufacturing method" or "additive manufacturing" refers to methods in which a three-dimensional object or a shaped body is produced by selective three-dimensional deposition, application and/or solidification of material. In this process, the deposition, application and/or solidification of the material takes place in particular based on a data model of the object to be produced, and in particular in layers. In the additive manufacturing method, each object is typically produced from one or a plurality of layers. Ordinarily, an object is manufactured using a shapeless material (e.g. liquids, powders, granules, pastes, etc.) and/or a shape-neutral material (e.g. bands, wires) that in particular is subjected to chemical and/or physical processes (e.g. melting, polymerization, sintering, curing or hardening). Additive manufacturing methods are also referred to using terms such as "generative manufacturing methods", "additive manufacturing" or "3D printing".

Compared to conventional technologies, which are based on object creation through either molding/casting or subtracting/machining material from a raw object, additive manufacturing or 3D printing technologies follow a fundamentally different approach for manufacturing. The processes used in additive manufacturing have their conceptual origin in inkjet printing technology, extended to the third dimension and other materials. It is possible to change the design for each object, without increasing the manufacturing costs, offering tailor made solutions for a broad range of industries at different scales, including construction.

Depending on the materials and the way they are deposited for layer creation, several additive manufacturing methods are known:
- Extrusion based technique: Objects are built by the selective deposition of materials through a nozzle.
- Jetting based technique: Objects are built by the selective deposition of droplets of the built material.
- Binder jet based technique: Objects are built by the selective deposition of a glue or a binder to a powder by an inkjet print head.
- Sheet lamination based technique: Objects are built by binding together sheets of material (paper, plastic or metal) and cut by a laser cutter for each layer.
- Photopolymerization based technique: Layers are formed by solidifying a liquid photopolymer by a light source or laser that follows a path. Alternatively, an image per layer can be projected for faster production.
- Powder bed fusion based technique: The technique is similar to binder jet technique, but in this case a thermal energy (laser sintering) fuses the selected areas of the powder bed, melting the material to form each layer to achieve a specified shape.
- Direct energy deposition technique: The material is fused by melting during deposition.

Each of the mentioned additive manufacturing methods may use different raw materials either as dry powders, liquids or filaments. Raw materials typically used include glass, modelling clay, metal alloys, ceramics, photopolymers, thermoplastics, cement and so forth, depending of the industry sector, for example construction, automobile, medical, aerospace, industrial design and others. The size of the printed object can vary from millimeters to several meters or larger. The object can be typically post-processed to increase the quality finish or to achieve a fully functional and finished object.

Especially in the field of architecture, there are some advantages of using additive manufacturing methods. The flexibility to adapt dimensions and shape on demand is of high value for the building sector. Individualized construction elements of complex shapes become more and more popular in the field of architecture for esthetical and more importantly, functional reasons. It is possible to have individualized elements at low cost compared to classic manufacturing technologies because 3D printing is an additive single piece manufacturing technology with no need of for example molding or casting forms. Furthermore, elements can directly be manufactured from a 3D virtual model or a 3D scan of a real object by a specialized software creating sliced patterns (cross-sections) and instructions that are transferred to the 3D printer. Another cost reducing aspect is the smaller amount of raw material required compared to other technologies. The materials can be processed during 3D printing, by special print heads, placing the material where it is needed, with minimal waste. Additionally, the proportion of the raw materials can be selected on demand, in order to change the composition while printing, thus giving the possibility to print elements with gradients with regard to properties such as e.g. mechanical strength, thermal conductivity, acoustic transmission, translucency, and so forth.

However, the physical and chemical properties of hardenable or curable building materials such as e.g. mortar or concrete compositions, make the advanced manufacturing, especially additive manufacturing and digital fabrication, of shaped bodies very difficult. In particular, due to kinetics during the hardening and curing process and the thixotropic properties of such building materials, the use of advanced manufacturing techniques, especially additive manufacturing techniques, is sharply limited.

There is thus a need to develop new and improved solutions which reduce or overcome the aforementioned drawbacks.

### Disclosure of the invention

It is an objective of the present invention to provide improved aerogel- and/or a xerogel-based compositions which are in particular suitable for advanced manufacturing, including but not limited to digital fabrication and/or additive manufacturing. Preferably, the compositions shall be suitable for use in other application techniques too. Especially, the compositions shall be suitable for producing ultra-high performance thermal insulating materials or composite elements for thermal insulation (superinsulation) with different scales or sizes. Preferably, in addition, the compositions shall be suitable for producing materials or elements with further improved properties such as high acoustic insulation, fire protection and/or safety. Especially, the compositions shall allow to produce insulation materials with lower thermal insulation values.

Surprisingly, it has been found that the problem of the invention can be solved by the features of claim 1. Thus, the core of the invention is a composition, in particular for use as a mass for advanced manufacturing, in particular a printable mass in additive manufacturing, comprising or consisting of:
a) 10 - 99.99 vol.%, especially 60 - 99.99 vol.%, in particular 80 - 99.99 vol.%, of a high-porosity material, whereby the high-porosity material is an aerogel and/or a xerogel
b) 0.001 - 5.0 vol.% of an organic binding promoter
c) optionally, balance to 100 vol.% of further components,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

As it turned out, such compositions can be used in advanced manufacturing, especially in additive manufacturing or 3D printing, respectively, and/or in digital fabrication, in a very flexible and efficient manner. Thanks to the inventive compositions, hydration, setting times, strength gains, mechanical properties, thermal conductivity, and shrinkage properties can be achieved which are highly suitable for advanced manufacturing, especially additive manufacturing.

In addition, the compositions, besides their particular suitability for additive manufacturing, are highly suitable for use as an extrudable mass for producing a shaped body by extrusion. Moreover, the compositions can be formulated in a manner which is especially suitable for spray application techniques, as well as digital casting.

Also, the compositions can be formulated with a low content of mineral binders, such as e.g. hydraulic binders or cementitious binders. It is even possible to completely omit mineral binders in the composition. It was surprisingly found that this will further improve the insulating properties. Nevertheless, it is still possible to obtain good mechanical properties of the structures that are for example produced by additive manufacturing out of such compositions.

Specifically, the compositions allow for producing complex materials, e.g. multilayer materials and/or gradient materials. Also, it is possible to produce prefabricated or on-site elements by additive manufacturing of flat and/or free-form elements with complex shapes. Thus, the inventive compositions can be used as a "3D-printing ink" for producing aerogel-an/or xerogel-based superinsulating materials, composites and elements in digitally controlled robotic fabrication processes.

Furthermore, with the inventive compositions it is possible to provide materials, composite elements or building elements with ultra-high thermal insulation performance, in other words a superinsulation element, in particular an architectural constructional element, with an ultra-low thermal conductivity with a thermal conductivity value λ (lambda) below 160 mW/(m·K), preferably below 100 mW/(m·K), especially less than 40 mW/(m·K), in particular less than 20 mW/(m·K).

Further aspects of the invention are the subject matter of other independent claims. Especially preferred embodiments of the invention are the subject matter of the dependent claims.

### Ways of carrying out the invention

According to a first aspect, the invention is concerned with a composition, in particular for use as a mass for advanced manufacturing, in particular a printable mass in additive manufacturing, comprising or consisting of:
a) 10 - 99.99 vol.%, especially 60 - 99.99 vol.%, in particular 80 - 99.99 vol.%, of a high-porosity material, whereby the high-porosity material is an aerogel and/or a xerogel
b) 0.001 - 5.0 vol.% of an organic binding promoter
c) optionally, balance to 100 vol.% of further components,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

In particular, the composition is a dry composition. This means that with respect to the weight of the high-porosity material, a proportion of water in the composition is 0 - 2 wt.%, especially 0 -1 wt.%, preferably 0 - 0.1 wt.%. Most preferred the composition is essentially or completely free of water.

Especially, the inventive composition is present in the form of a free-flowing powder composition.

In particular, a minimum amount of the high-porosity material, especially the aerogel, is > 50 vol.%, especially > 60 vol.%, in particular > 70 vol.%, particularly > 80 vol.%, for example > 90 vol.%, especially preferred > 93 vol.%.

In the present context, an "aerogel" is a porous particulate material, typically derived from a gel, in which the liquid component for the gel has been replaced with a gas. The aerogel can be silica-based, carbon-based, cellulose-based, (bio)polymer-based or metal based, or a combination thereof (hybrid aerogel). The porosity of the aerogel is above 50 vol.%, typically in the range of 90 - 99.98 vol.%.

Likewise, a "xerogel" is a porous particulate material, typically derived from a gel, in which the liquid component for the gel has been replaced with a gas. The xerogel can be silica-based, carbon-based, (bio)polymer-based or metal based, or a combination thereof (hybrid xerogel). However, in contrast to the aerogel, the porosity of the xerogel is significantly lower, in particular in the range of 15 - 50 vol.%.

According to a highly preferred embodiment, the high-porosity material is an aerogel.

A silica aerogel or a silica-based aerogel, respectively, can e.g. be derived from silica gel, by a modified Stöber process and/or by the method according to Kistler. Carbon-based aerogels can for example be created by pyrolysis in an inert atmosphere. Depending on the raw material different chemical syntheses are also possible and known to the person skilled in the art as well.

Especially, the aerogel is a hydrophobic aerogel. However, hydrophilic aerogels can be used as well.

Especially, the high-porosity material, in particular the aerogel, has a particle density of 50 - 300 kg/m³, in particular 70 - 200 kg/m³, preferably 140 - 170 kg/m³ (measured at 20 °C and 1 atm). The "particle density" is meant to be the density of the individual particles making up the high-porosity material and is defined as the mass of the individual particles of the high-porosity material divided by the volume occupied by the particles considered. The volume includes particle volume and internal pore volume but not the inter-particle void volume. Thus, the term particle density is not to be confused with the bulk density or apparent density, which are defined as the mass of many particles divided by the total volume (including the inter-particle void volume) occupied by all of the particles considered.

According to a highly preferred embodiment, the high-porosity material is a silica-based aerogel especially a hydrophobic silica-based aerogel, with a particle density of 140 - 170 kg/m³.

Especially preferred, a volume proportion of the high-porosity material, in particular the aerogel, in the composition is 85 - 99.99 vol.%, most preferred 90 - 99.95 vol.%.

In particular, it is preferred that apart from the high-porosity material, in particular the aerogel, the volume proportion of all of the other constituents of the composition in dry state is lower than 7 vol. %, preferably lower than 3 vol.% and even more preferably lower than 1 vol.%.

Furthermore, it is preferred that, apart from the high-porosity material particles, all of the possibly present particulate constituents of the compositions have a particle size (d₉₅) between 10 nanometers to 1 millimeter, preferably between 15 nanometers and 100 micrometer and more preferably between 20 nanometers and 10 micrometers. Thereby, it is possible that the particulate constituents of these particle sizes are agglomerates as described below. However, when the composition is mixed with water, the agglomerates will fall apart and release the particles comprised therein.

Overall, such volume proportions and/or particle sizes will increase the thermal insulation properties of the composition or the materials produced thereof.

In the present context, an "organic binding promotor" is a substance which is capable of establishing a binding between high-porosity material particles, especially between aerogel particles, in the hardened composition.

Especially, the organic binding promotor comprises or consists of a surfactant, a block co-polymer, a fluoropolymer, a cellulose ether, carbohydrate starch ether and/or a redispersible polymer. Most preferred are surfactants and/or redispersible polymers.

According to a highly preferred embodiment, the organic binding promotor comprises or consists of a surfactant, especially selected from the groups of ionic surfactants, amphoteric surfactants and/or nonionic surfactants. An ionic surfactant can be a cationic surfactant or an anionic surfactant.

Anionic surfactants can for example include alkyl sulfates and/or alkyl ether sulfates, especially ammonium lauryl sulfate and/or sodium polyoxyethylene lauryl ether sulfate.

Especially, cationic surfactants can include, aliphatic ammonium salts and/or amine salts, in particular alkyl trimethylammonium and/or polyoxyethylene alkyl amine.

Amphoteric surfactants may for example include alkyl dimethyl betain, alkyl dimethyl amine oxide.

Nonionic surfactants can include glycerol fatty acid ester, propylene glycol fatty acid ester, sorbitan fatty acid ester, polyoxyethylene sorbitan fatty acid ester, tetraoleic acid polyoxyethylene sorbitol, polyoxyethylene alkyl ether, polyoxyethylene alkyl phenyl ether, polyoxyethylene polyoxypropylene glycol, polyoxyethylene polyoxypropylene alkyl ether, polyethylene glycol fatty acid ester, higher fatty acid alcohol ester, and/or polyhydric alcohol fatty acid ester.

Especially, block co-polymers can be selected from glycol based block co-polymers, in particular comprising blocks of polyethylene glycol (PEG) and polypropylene glycol (PPG). Especially, the block co-polymer is a triblock copolymer. For example, the block co-polymer can have the following structure: PEG-PPG-PEG or PPG-PEG-PPG.

In particular, an average molecular weight M_{w} of the block copolymer is 500 - 15'000 g/mol, especially 1'000 - 8'000 g/mol, preferably 3'000 - 7'000 g/mol. Such masses are understood to be taken before any possible cleaving or splitting of the copolymer during the processing.

According to a further preferred embodiment, the organic binding promoter comprises or consists of a redispersible polymer. In the present context, a "redispersible polymer" is a polymeric material which can disperse in water.

Preferably the redispersible polymer is based on one or more monomers selected from vinyl acetate, ethylene, vinyl alcohol, vinyl versatate, acrylate, styrene and/or acrylic ester. E.g. the redispersible polymer can be a poly(ethylene-vinyl acetate).

In particular, an average molecular weight M_{w} of the redispersible polymer is 100 - 10'000 g/mol, especially 200 - 6'000 g/mol, more preferably 250 - 3'500 g/mol. Such masses are understood to be taken before any possible cleaving or splitting of the copolymer during the processing

Preferably, a pH of the redispersed polymer in water (10 wt.% aqueous redispersion) is from 5 to 12.5, preferably from 5.5 to 12, even more preferred from 6 to 12.

According to a preferred embodiment, the redispersible polymer may contain mineral antiblock agents and/or water-soluble organic polymeric protective colloids, preferably with high molecular weight.

Water-soluble organic polymeric protective colloids can for example be selected from (i) natural compounds, such as e.g. be polysaccharides, (ii) synthetic oligomers, especially fully or partially saponified, (iii) modified polyvinyl alcohols, polyvinyl pyrrolidones and/or polyvinyl acetals. One or more polyvinyl alcohols can be for example be used together, if necessary with small quantities of suitable emulsifiers.

Other stabilizing systems for the redispersible polymers may include block copolymers of propylene oxide and ethylene oxide, styrene-maleic acid copolymers, vinyl ether-maleic acid copolymers, melamine formaldehyde sulfonate and/or naphthalene formaldehyde sulfonates.

Oligomers may be nonionic, cationic, anionic and/or amphoteric emulsifiers, such as e.g. alkyl sulfates, alkyl sulfonates, sulfates of hydroxylalkanols, alkyl and alkylaryldisulfonate, alkylaryl sulfonates, sulfonated fatty acids, phosphates and sulfates of polyethoxylated alkanols and alkylphenols, as well as esters of sulfosuccinic acid, quaternary alkylphosphonium salts, quaternary alkylammonium salts and/or polyalkoxylates.

However, redispersible polymers based on further and/or other monomers might be suitable as well.

According to a highly preferred embodiment, the organic binding promoter is a surfactant and/or a redispersible polymer whereas the high-porosity material is a silica-based aerogel, especially a hydrophobic silica-based aerogel. Thereby, preferably, the silica-based aerogel has a particle density of 140 - 170 kg/m³.

Preferably, the composition additionally includes 0.001 - 43 vol.%, especially 0.001 - 28 vol.%, preferably 0.001 - 16 vol.%, of a filler. The filler is chemically and/or physically different from the other constituents of the composition, especially from the organic binding promotor and from the high-porosity material present in the composition.

In the present context, the term "filler" is to be interpreted in a broad sense. Thus, the filler encompasses particulate materials with submicron-sized particles, micrometer-sized particles, millimeter-sized particles up to centimeter-sized particles.

The filler can be an inert material and/or a reactive material. An inert material is meant to be a material which does not react chemically with the other components of the composition under storage, processing and application conditions.

In terms of chemical composition, the filler can be an inorganic, organic, or inorganic-organic-hybrid material. In particular, the filler is a particulate material. Especially a maximum particle size of the filler is 10 mm, especially 5 mm, in particular 2 mm or 1 mm.

Especially, the fillers are chosen from mineral aggregates and/or organic aggregates.

In particular, the filler can be a non-porous, porous and/or expanded filler.

The filler can in principle have any kind of shape. However, according to a special embodiment, the filler is sphere shaped and/or the filler has a hollow shape. In case of a filler with a hollow shape, the filler can in particular be gas filled and/or evacuated. "Evacuated" means that the pressure in the hollow sphere shaped filler is lower than 1 atmosphere, especially lower than 0.5 atmospheres, in particular lower than 0.1 atmospheres.

Especially, the filler is hollow sphere shaped. In this case, the hollow sphere shaped filler can in particular be gas filled and/or evacuated.

For fillers with a hollow shape which are gas filled, a gas with thermal conductivity lower than air is preferably used. Suitable gases can e.g. be selected from a gas which, under standard conditions (T = 20°C, p = 1 bar), has a higher density than air. For example, argon and/or krypton can be used as a gas to fill hollow fillers.

However, air can be used as a gas to fill fillers with a hollow shape as well.

For example, mineral aggregates are chosen from: sand, limestone, artificial stone, quartz, fly ash, micro silica, metal<aolin, silica fume, fumed silica, granulated blast-furnace slag, foamed blast furnace slag, volcanic slag, expanded clay, expanded shale, expanded slate, foamed glass, perlite, pumice, pozzolans, diatoms, vermiculite, norlite, ceramic particles, ceramic spheres, and/or porous silica.

In particular, ceramic spheres can be hollow, especially hollow and gas filled and/or hollow and evacuated, especially as described above.

Porous silica can be selected form all kind of grades, especially from macro to nano-porous silica.

An organic filler can be chosen from rubber, polystyrene, expanded polystyrene, extruded polystyrene and/or polyurethane foam.

In a further preferred embodiment, the composition additionally includes 0.001 - 25 vol.%, especially 0.001 - 5 vol.%, preferably 0.001 - 1 vol.%, of a binder. The binder is chemically and/or physically different from the other constituents of the composition, especially from the organic binding promoter, the filler, and the high-porosity material.

Preferably, the composition comprises less than 25 vol.%, especially less than 5 vol.%, preferably less than 1 vol.%, of a binder, especially of a mineral binder.

Preferably, the composition comprises less than 90 kg/m³, especially less than 50 kg/m³, preferably less than 25 kg/m³, of a binder, especially of a mineral binder.

In a further preferred embodiment, the composition comprises a volume proportion of the high-porosity material, in particular the aerogel, of 85 - 99.99 vol.%, most preferred 90 - 99.95 vol.%. and at the same time less than 5 vol.%, preferably less than 1 vol.%, of a binder, especially a mineral binder.

The expression "binder" especially refers to a substance which reacts in the presence of water to give a cured and/or hardened solid product.

Preferably, the binder is an organic binder and/or a mineral binder. However, mineral binders are most preferred. The expression "mineral binder" refers more particularly to a binder which reacts in the presence of water in a hydration reaction, to give solid hydrates or hydrate phases. This may be, for example, a hydraulic binder (e.g., cement or hydraulic lime), a latent hydraulic binder (e.g., slag), a pozzolanic binder (e.g., fly ash), or a non-hydraulic binder (gypsum or white lime).

The mineral binder comprises more particularly a hydraulic binder. Especially, the binder is selected from cementitious binders.

Preferably, the binder is selected from ordinary Portland cement (OPC), Portland cement, composite cement, calcium aluminate cement, calcium sulfoaluminate cement, magnesium oxide, cement comprising belite, especially in higher amounts than ordinary Portland cement, silicate cements, aluminosilicate-based cements, lime, gypsum, as well as combinations thereof.

It may, however, also be advantageous if the binder or the mineral binder comprises or consists of other binders. These are, in particular, latent hydraulic binders and/or pozzolanic binders. Examples of suitable latent hydraulic and/or pozzolanic binders include slag, flyash and/or silica dust.

However, according to another preferred embodiment, the composition is free of a mineral binder, especially a hydraulic binder, in particular a cementitious binder. This is especially beneficial in combination with a volume proportion of the high-porosity material, in particular the aerogel, in the composition of 85 - 99.99 vol.%, most preferred 90 - 99.95 vol.%. Further preferred, the composition additionally includes 0.00028 - 7.0 vol.%, especially 0.00028 - 1.4 vol.%, preferably 0.00028 - 0.28 vol.%, of an expansive agent. The expansive agent is chemically and/or physically different from the other constituents of the composition, especially from the organic binding promoter, the filler, the high-porosity material and the binder. In the present context, an "expansive agent" is an agent which reduces shrinkage of the composition during hardening, e.g. by controlling hydration and/or hardening times as well as the strength build up. This is helpful for advanced manufacturing, especially 3D printing, in order to provide enough strength during the manufacturing process, e.g. to the 3D printed material to support subsequent layers.

In particular, the expansive agent is an agent that can generate expansive products such as ettringite, magnesium silicate hydrate (M-S-H), portlandite and/or thaumasite.

Especially, the expansive agent is a compound, which is capable to react with silica and thereby generating an expansive product. For example, the expansive agent is a magnesium salt, e.g. magnesium oxide. In this case, the magnesium salt can react with silica to form magnesium silicate hydrates.

Especially, the expansive agent is a mineral based expansive agent.

Preferably the expansive agent comprises or consists of calcium aluminate, calcium sulfoaluminate, calcium sulfates, calcium carbonate, lime, magnesium oxide or combinations thereof.

According to another preferred embodiment, the expansive agent is selected from alumina powder, expansive soils and swelling clays. Swelling clays can comprise or consist of smectite, montmorillonite, bentonite, beidellite, vermiculite, attapulgite, nontronite, and/or chlorite.

Furthermore, other expansive agents, such as e.g. polymers that can for example be activated with rising temperature can also be employed.

According to a special embodiment, the binder as well as the expansive agent both comprise or consist of magnesium compounds, especially magnesium salts, in particular the same magnesium salt. For example, the binder as well as the expansive agent can comprise or consist of magnesium oxide. In this case, the magnesium salt or the magnesium oxide, respectively, can be used for shrinkage compensation and for generating a binding phase at the same time.

Preferably, the composition additionally includes 0.0001 - 0.0999 vol.%, especially 0.0001 - 0.05 vol.%, preferably 0.0001 - 0.02 vol.%, of a curing agent. The curing agent is chemically and/or physically different from the other constituents of the composition, especially from the organic binding promoter, the filler, the high-porosity material, the binder and the expansive agent. In the present context, a "curing agent" is a chemical compound which is capable of retaining water and/or reducing moisture content loss during early stages of the hardening of the composition. The proportions of the curing agent are given with regard to the curing agent before contact with water or with respect to the dry curing agent, respectively.

With a curing agent, it is even possible to use high proportions of water when mixing up the compositions for application without adversely affecting the mechanical properties of the hardened composition. This is in particular beneficial in 3D printing processes since mixed-up compositions with a high water content can be extruded and/or delivered though a nozzle more easily.

The above mentioned proportions of the curing agent contribute to enhance the mechanical properties of the hardened composition, in particular a better binding with negligible effects on total porosity and thermal conductivity can be obtained. Specifically, these agents give rise to a better matrix hydration and therefore improve the mechanical properties and reduce shrinkage cracking which is especially important for additive manufacturing and digital fabrication, in particular 3D printing.

Higher proportions of the curing agent can lead to a worsening of both mechanical and thermal insulating properties of materials produced from such compositions.

Especially, the curing agent is an internal curing agent. An internal curing agent is present within the composition during hardening.

Highly preferred, the curing agent is a water retaining additive, especially a super absorbing polymer (SAP).

In the present context a "super absorbing polymer" is a polymer capable of absorbing and retaining water. Preferably, the superabsorbing polymer can absorb water in an amount of at least 30, especially at least 100, preferably at least 300 times its weight.

For example, the super absorbing polymer is chosen from the group consisting of crosslinked sodium polyacrylates, crosslinked sodium acrylamide, acrylate copolymers, crosslinked sodium acrylate, acrylamide copolymers, copolymers of a compound comprising at least one group of the sulphonic and/or phosphonic type, hydrolyzed crosslinked starch, acrylonitrile copolymers, crosslinked maleic anhydride and ethylene copolymers, crosslinked carboxymethylcellulose, crosslinked polyethylene oxide, phosphoric acid grafted polyvinyl alcohol-based polymers, and mixtures thereof.

Furthermore, the composition preferably includes 0.001 - 15.0 vol.%, especially 0.001 - 5.0 vol.%, preferably 0.001 - 1.0 vol.%, fibers. The fibers are chemically and/or physically different from the other constituents of the composition, especially from the organic binding promoter, the filler, the high-porosity material, the binder, the expansive agent and the curing agent. Fibers might help to reduce shrinkage cracking during hardening of the composition.

Preferably, the fibers are selected from metal fibers, steel fibers, glass fibers, wood fibers, wool fibers, ceramic fibers, mineral fibers, carbon fibers, organic fibers, and/or synthetic polymer fibers, such as polypropylene fibers, aramid fibers, Kevlar fibers, and/or Nomex fibers.,.

The fibers can be in the form of individual fibers and/or in the form materials comprising interconnected fibers. A suitable material comprising interconnected fibers is for example mineral wool and/or glass wool.

According to a special embodiment, the fibers are in the form of mineral wool, especially selected from glass wool, ceramic wool, polycrystalline wool, kaowool, stone wool and/or rock wool.

Preferably, the fibers are non-flammable and/or fire resistant. These are for example fibers in the form of mineral wool, silica fibers, glass fibers, aramid fibers, Kevlar fibers, nomex fibers, steel fibers and/or carbon fibers.

Additionally, the composition preferably includes 0.001 - 5.0 vol.%, especially 0.001 - 1.0 vol.%, preferably 0.001 - 0.2 vol.%, opacificer. The opacifier is chemically and/or physically different from the other constituents of the composition, especially from the organic binding promoter, the filler, the high-porosity material, the binder, the expansive agent, the curing agent and the filler. An "opacifier" is a substance which is added in order to make the composition opaque. An example of an opacifier is titanium dioxide (TiO₂). However, other opacifiers can be used as well.

Other additional substances, e.g. for improving workability, shear behavior, setting kinetics and/or dimensional stability, in particular with respect to drying, can also be included in the composition.

A first highly preferred composition, in particular for use as a printable mass in additive manufacturing, comprises or consists of:
a) 60 - 99.99 vol.% of a high-porosity material, especially an aerogel
b) 0.001 - 2.0 vol.% of an organic binding promoter, especially selected from surfactants and/or redispersible polymers
c) 0.001 - 28 vol.% of fillers, especially selected from mineral aggregates
d) optionally, balance to 100 vol.% of further components,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

A second highly preferred composition, in particular for use as a printable mass in additive manufacturing, comprises or consists of:
a) 80 - 99.99 vol.% of a high-porosity material, especially an aerogel
b) 0.001 - 1.0 vol.% of an organic binding promoter, especially selected from surfactants and/or redispersible polymers
c) 0.001 - 16 vol.% of fillers, especially selected from mineral aggregates
d) optionally, balance to 100 vol.% of further components,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

A third highly preferred composition, in particular for use as a printable mass in additive manufacturing, comprises or consists of:
a) 60 - 99.99 vol.% of a high-porosity material, especially an aerogel
b) 0.001 - 2.0 vol.% of an organic binding promoter, especially selected from surfactants and/or redispersible polymers
c) 0.001 - 28 vol.% of fillers, especially selected from mineral aggregates
d) 0.001 - 5 vol.%, of a binder, especially a mineral binder, preferably a cementitious binder
e) optionally, balance to 100 vol.% of further components, in particular as described above,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

A fourth highly preferred composition, in particular for use as a printable mass in additive manufacturing, comprises or consists of:
a) 80 - 99.99 vol.% of a high-porosity material, especially an aerogel
b) 0.001 - 1.0 vol.% of an organic binding promoter, especially selected from surfactants and/or redispersible polymers
c) 0.001 - 16 vol.% of fillers, especially selected from mineral aggregates
d) 0.001 - 1 vol.%, of a binder, especially a mineral binder, preferably a cementitious binder
e) optionally, balance to 100 vol.% of further components, in particular as described above,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

A fifth highly preferred composition, in particular for use as a printable mass in additive manufacturing, comprises or consists of:
a) 60 - 99.99 vol.% of a high-porosity material, especially an aerogel
b) 0.001 - 2.0 vol.% of an organic binding promoter, especially selected from surfactants and/or redispersible polymers
c) 0.001 - 28 vol.% of fillers, especially selected from mineral aggregates
d) 0.001 - 5 vol.%, of a binder, especially a mineral binder, preferably a cementitious binder
e) optionally, 0.00028 - 1.4 vol.% of an expansive agent, especially a mineral based expansive agent
f) optionally, 0.0001 - 0.05 vol.% of a curing agent, especially a super absorbing polymer
g) optionally, 0.001 - 15 vol.%, fibers
h) optionally, balance to 100 vol.% of further components, in particular as described above,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

A sixth highly preferred composition, in particular for use as a printable mass in additive manufacturing, comprises or consists of:
a) 80 - 99.99 vol.% of a high-porosity material, especially an aerogel
b) 0.001 - 1.0 vol.% of an organic binding promoter, especially selected from surfactants and/or redispersible polymers
c) 0.001 - 16 vol.% of fillers, especially selected from mineral aggregates
d) 0.001 - 1 vol.%, of a binder, especially a mineral binder, preferably a cementitious binder
e) optionally, 0.00028 - 0.28 vol.% of an expansive agent, especially a mineral based expansive agent
f) optionally, 0.0001 - 0.02 vol.% of a curing agent, especially a super absorbing polymer
g) optionally, 0.001 - 1 vol.%, fibers
h) optionally, balance to 100 vol.% of further components, in particular as described above,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

A seventh highly preferred composition, in particular for use as a printable mass in additive manufacturing, comprises or consists of:
a) 80 - 99.99 vol.% of a high-porosity material, especially an aerogel
b) 0.001 - 1.0 vol.% of an organic binding promoter, especially selected from surfactants and/or redispersible polymers
c) 0.001 - 16 vol.% of fillers, especially selected from mineral aggregates
d) whereby the composition is free of a mineral binder, preferably free of a hydraulic binder, in particular free of a cementitious binder
e) optionally, 0.00028 - 0.28 vol.% of an expansive agent, especially a mineral based expansive agent
f) optionally, 0.0001 - 0.02 vol.% of a curing agent, especially a super absorbing polymer
g) optionally, 0.001 - 1 vol.%, fibers
h) optionally, balance to 100 vol.% of further components, in particular as described above,
wherein the high-porosity material particles, most preferred aerogel particles, are present in agglomerated state, characterized in that the agglomerates of the high-porosity material particles have a size of 0.1 - 50 mm, especially of 0.5 - 20 mm, preferably of 0.7 - 10 mm.

Thereby, preferably, the composition is a dry composition, which preferably is present in the form of a free-flowing powder composition.

According to an advantageous embodiment, the inventive composition is present as a one-component composition, especially as a dry free-flowing powder one-component composition. In this case, all of the components are present in a single receptacle. This excludes the risk of a mix-up or wrong dosing of individual components by users.

However, it is in principle possible to provide a two-component composition or even a multi-component composition. For example, a first component may e.g. be present in a first receptacle comprising the high-porosity material, especially the aerogel, and optionally fillers. A second component, present in a second receptacle, may comprise the organic binding promoter and optionally further components of the composition. Other distributions are possible as well. Two- or multi-component compositions allow e.g. for adjusting the composition with regard to specific applications.

The high-porosity material particles, most preferred aerogel particles, are present in agglomerated state. Agglomerates are meant to be particles consisting of a plurality of particles of the one or more particulate constituents in interconnected state. In particular, the particles in the agglomerates are interconnected such that when mixing the composition with mixing water for application, possibly in additional presence of a dispersant, the agglomerates will at least partially fall apart and release all or part of the particles comprised therein.

This embodiment has the advantage that the amount of sub-micron sized particles, such as e.g. fillers and/or fine high-porosity material powder, can be reduced, resulting in a dry powder which is healthier for user manipulation and generally more convenient to process. Thereby, the agglomerates of the one or more particulate constituents have a size from 0.1 - 50 mm, especially, 0.5 - 20 mm, preferably, 0.7 - 10 mm. The size of the agglomerates refers to the length of the agglomerate measured in a direction of the longest dimension.

Preferably, the agglomerates comprise or consist of the high-porosity material, the binding promoter and optionally the filler. Thereby, preferably, the high-porosity material is an aerogel.

Agglomerates are obtainable by premixing the one or more particulate constituents with each other, especially in the presence of a liquid, and optionally with further components of the composition. Especially, the liquid, if present, is chosen from water and/or organic solvents. Preferably, the organic solvents, if present, are evaporable solvents such as e.g. alcohols.

Subsequently, the so obtained agglomerates can be dried, if necessary, and mixed with the rest of the components of the composition if desired. Thereby, a dry composition with the one or more particulate constituents of the composition in agglomerated state, especially a ready mix dry composition, is obtained.

According to a first preferred embodiment, the agglomerates are obtainable by premixing the one or more particulate constituents with each other and optionally with further components of the composition in the absence of a liquid. Due to the dry mixing action, small particles will generate weak bonds with other particles thereby generating bigger agglomerates. Subsequently, the so obtained agglomerates can be mixed with the rest of the components of the composition, if desired.

According to a second preferred embodiment, the agglomerates are obtainable by premixing the one or more particulate constituents with a liquid, especially water, and optionally with further components of the composition. Also by these means, small particles will generate weak bonds with other particles thereby generating bigger agglomerates. The use of a liquid may increase the bond strength between the particles. Subsequently, the so obtained agglomerates can be dried and mixed with the rest of the components of the composition, if desired.

The proportion of the liquid and/or the mixing conditions are to be chosen such that agglomerates of desired size are obtained.

For example, high-porosity material particles, especially aerogel particles, and optionally fillers can be mixed with water and the binding promoter, especially a surfactant, by manual or mechanical mixing. Then, the so obtained agglomerates can be dried in order to obtain a ready mix dry composition.

Once the dry composition with the one or more particulate constituents of the composition in agglomerated state is mixed with mixing water for application, the weakly bonded particles of the agglomerates will disperse in contact with water, forming a homogeneous slurry suitable for application.

Surprisingly, it has been found that these agglomerates comprising high-porosity material particles, especially aerogel particles, are mechanically stronger that the high-porosity material particles, especially the aerogel particles, themselves, therefore, making them suitable for special applications of digitally controlled spraying techniques, or even for traditional sprayable insulating plasters/renders, as well as digital casting. In this sense, it is well known that machines typically used for on-site (or off-site) spraying, damage the lightweight aggregate (such as aerogel or xerogel particles) during the conveying and spraying processes (i.e. at the rotostator and/or the spraying gun). Such damage typically reduces the thermal insulating capacity of insulating renders compared to hand-made applications. In particular, for aerogel based renders, the thermal conductivity increases between 3 to 5 mW/m·K. However, with the proposed inventive measures, the robust generated agglomerates are strong enough just to get dispersed progressively within the continuous mixer, rotostator and/or spraying gun of the plastering machine, with negligible effects on final material properties, in particular thermal insulating capacity. Furthermore, it is of particularly high importance, that besides the enhanced mechanical properties of these pre-processed high-porosity material agglomerates, especially aerogel agglomerates, in comparison to pristine high-porosity material agglomerates, especially aerogel particles, the appearance is easily distinguishable compared to the latter, therefore, highly traceable. In this sense, the opacity of the agglomerates is much higher than original high-porosity material particles, especially aerogel particles, thus mostly of a white color. Nevertheless, a person skilled in the art, will be able to change the appearance of the agglomerates in order to obtain as a result, a product more similar to the original particles, e.g. by adding suitable pigments. Therefore, a further embodiment of this invention comprises the production and use of these agglomerates beyond additive manufacturing, in particular to be used as the main insulating component for aerogel-based insulating renders/plasters.

Thus, according to a further preferred aspect of the present invention, an inventive composition comprising high-porosity material particles, especially aerogel particles, in agglomerated state, is used for producing a covering on a surface, especially for producing a render and/or a plaster on a surface, with a spray application technique, in particular with a shotcrete application technique. Thereby, preferably, the inventive composition is used for producing a thermally insulating covering, especially a thermally insulating render and/or plaster.

Likewise, according to another preferred aspect of the present invention, an inventive workable mixture, comprising an inventive composition with high-porosity material particles, especially aerogel particles, in agglomerated state and water, is used for producing a covering on a surface, especially for producing a render and/or a plaster on a surface, with a spray application technique, in particular with a shotcrete application technique. Thereby, preferably, the inventive workable mixture is used for producing a thermally insulating covering, especially a thermally insulating render and/or plaster.

Thereby, the inventive compositions comprising the high-porosity material particles, especially aerogel particles, in agglomerated state, are defined as described above.

A spray application technique is meant to be a method by which a composition used for producing a render or a plaster is sprayed into place, rather than the conventionally used pouring or placing into formwork. Thereby, the composition used for producing a render or a plaster typically is conveyed through a hose and projected at high velocity onto a surface.

A further aspect of the present invention is directed to a workable mixture comprising a composition as described above and water. Especially, the workable mixture is obtainable by mixing a composition as described above with water. Thereby, preferably, the mixing is done by mechanical stirring.

Preferably, a weight proportion of water to the high-porosity material, especially the aerogel, in the workable mixture is from 0.2 - 3.5, especially 1 - 2.2, preferably 1.4 - 1.8.

Another aspect of the invention is directed to a hardened composition which is obtainable by letting hardening a workable mixture as described above.

Especially, the hardened composition is part of a composite element comprising the hardened composition and a substrate.

Thus, another aspect of the present invention is a composite element comprising a hardened composition as described above and a substrate. In particular, the hardened composition is placed on the substrate.

The substrate can e.g. comprise or consist of concrete, wood, stone, rock, metal, glass, a polymeric material, glass fiber sheets, glass fiber mats, a ceramic, cardboard, paper or composites of these materials. These substrates may also be treated to enhance their adhesion to the thermal insulation layer.

It is possible to place chemically and/or physically different hardened compositions on the same substrate. The different hardened compositions can for example be placed beside each other on the substrate and/or on top of each other, e.g. in a layered structure.

The substrate can for example be a load bearing element, such as e.g. a panel, which carries the hardened composition and/or which acts as a structural element for the hardened composition.

Moreover, the composite element may comprise parts and/or sections with additional material, e.g. consisting of wood, polymers, glass, membranes, metals, steel reinforcements, concrete, mortar, ultra-high performance concrete or mortar, high heat storage capacity materials, phase change materials, vapor barriers, fire protective layers, steel reinforcements, carbon fiber meshes, and/or glass fiber meshes. These additional materials can for example be present in one or more layers, especially on top of and/or below the hardened composition.

Especially, the composite element is a fully finished solution, such as a sandwich or multilayer element like a panel or wall for the construction sector, a multi-section and/or multi-material element, such as a thermally insulating brick, thermally insulating roof or slab, or a complex architectural element, or a selective layer to complement existing systems like for building renovations or for insulating engines and the like.

For the composite material, different production routes may be considered. For example, the hardened composition may be produced separately from the substrate and in a subsequent step the substrate and the hardened composition are assembled.

Also, it is possible to provide or produce a part of the composite element first, e.g. the substrate, then placing the workable composition on the substrate in order to obtain the hardened composition on the substrate after hardening.

Furthermore, it is possible, to produce the different parts of the composite element simultaneously, for example by multiple digitally controlled extrusion or multi material additive manufacturing.

It is also possible to combine different compositions to print and/or to place in additional layers simultaneously. This can e.g. be done through a parallel arrangement of two or more printing nozzles or in combination with other types of tool heads. With such techniques, it is possible to provide multilayer elements for different industry sectors, for example with enhanced durability (fire protection), acoustic insulation and so forth.

A further aspect of the invention is the use of the composite element according to the described embodiments for at least partially covering or providing a surface, in particular the outer wall of a building, or to realize a covering element for a section of an outer wall of a building.

An outer wall means an element of a cladding or cover. A covering element means for example a high performance thermally insulating panel, a high performance thermally insulating structural or nonstructural wall, a high performance thermally insulating brick, a high performance thermally insulating multifunctional advanced flooring system such as a slab, a ceiling or a roof, and so forth.

In particular, the composite element is used to realize high performance thermal insulation in fields such as e.g.: automotive, transport, construction and architecture, power or production plants, technical systems of facilities, such as pipe insulation of heating as well as cooling distribution system and so forth. Advantageous is the use in the field of architecture and construction and technical systems of facilities.

Furthermore, the invention is directed to the use of a composition and/or a workable composition as described above as a printable mass in an additive manufacturing method, especially an additive free-space method, for producing a shaped body.

Also, the invention is directed to the use of a composition and/or a workable composition as described above as an extrudable mass for producing a shaped body by extrusion, especially by extrusion on a mold.

Furthermore, the invention is directed to the use of a composition and/or a workable composition as described above for producing a shaped body by digital casting.

Especially, the digital casting takes place in a mold and/or a formwork, preferably in a mold and/or formwork that is moved and/or tilted during casting.

Most preferred, the dispensing device, the mold, the substrate and/or the formwork is vibrated during additive manufacturing, extrusion and/or digital casting, especially for compacting the composition or the workable mixture.

Likewise, the invention is related to a method for producing a shaped body from a composition and/or a workable composition as described above, especially by additive manufacturing, digital casting and/or by extrusion. In particular, the method is performed with a device having at least a supporting unit that supports a dispensing unit, especially a print head and/or an extrusion device.

According to a preferred embodiment, the device or the supporting unit comprises a movement device which allows for moving the dispensing unit and the shaped body to be produced relative to each other in at least one spatial direction, preferably in all three spatial directions. In particular, the movement device is selected from a robotic arm, a conveying band, a multi-axial working table and/or a rotatable working table. The multi-axial working table can e.g. be a two-axis (X-Y) working table or a three-axis (X-Y-Z) working table.

Especially, the movement device is designed to (i) move the dispensing unit, especially a print head, while the shaped body to be produced remains in a fixed position, (ii) move the shaped body to be produced, e.g. by moving a support element of the shaped body, whereas the dispensing unit, especially the print head, remains in a fixed position, or (iii) move both, the dispensing unit, especially the print head, as well as the shaped body to be produced. In each options (i), (ii) and (ii), the movement device allows for a movement in at least one spatial direction, preferably in all three spatial directions, possibly including additional rotations.

In case of option (iii) it is possible to use a movement device which is configured for moving each of the dispensing device and the shaped body to be produced in all three spatial directions, or to use a movement device which is configured such that dispending device, especially the print, head can be moved in one, two or three dimensions, as well as rotated, whereas the shaped body to be produced can be moved complimentarily to the print head in any spatial direction(s), as well as rotated.

Especially a trajectory of the moving device, or in other words the range of motion of the moving device, is in particular at least 0.4 m in all directions of space, especially at least 1 m or is even at least 5 m. It is possible that the moving device is partially, or even fully, digitally controlled.

According to another preferred embodiment, the device or the supporting unit comprises a transport device for moving a prefabricated substrate, especially a substrate as described above, relative to the dispensing unit in at least one spatial direction. In particular, the transport device is selected from a roller conveyor, a conveying band, a belt conveyor, multi-axial table and/or a robotic arm. A transport device allows for example to apply a composition and/or a workable composition on a rolling cardboard and/or paper, similar to the process of gypsum wall-boards production.

In a further preferred embodiment, the device comprises a mold and/or a formwork, especially a mold and/or a formwork that can be moved and/or tilted during casting the composition or the workable mixture. Especially, the device is configured for slip forming.

Especially, the device comprises a unit for effecting vibrations in the dispensing device, the mold, the substrate and/or the formwork. With such a unit, it is possible to vibrate the composition or the workable mixture when placing or casting it. This is helpful for compacting the composition or the workable mixture, e.g. by removing undesired air bubbles.

The term "additive manufacturing method" or "additive manufacturing" refers to methods in which a three-dimensional object and/or a shaped body is produced by selective deposition, application and/or solidification of material especially based on a data model of the shaped body to be produced. Most preferred the additive manufacturing is an additive free-space method. In particular, in the additive manufacturing method, the composition and/or the workable composition is applied by means of a print head, whereby a movement device allows for moving the print head and the shaped body to be produced relative to each other in at least one spatial direction, preferably in all three spatial directions.

Especially, the print head has a nozzle for delivering the material to be printed. The nozzle can have a fixed outlet opening or an adjustable outlet opening. An adjustable outlet opening allows e.g. for varying the thickness and width of the printed material.

In the present context, "extrusion" refers to methods in which a three-dimensional object and/or a shaped body is produced by pushing the composition and/or the workable composition through a die with a predefined cross-section. Optionally, the material exited from the die can be extruded into a mold, a surface and/or a substrate, e.g. for defining the final shape of the body to be produced and/or for producing composite elements. Also it is possible to use dies with adjustable cross-sections. This allows for varying thickness and/or curvature of the extruded material.

Thus, in contrast to additive manufacturing, with extrusion the shape of the body produced is finally defined by the shape of a forming element, in particular the cross-section of the die, the mold, the surface and/or the substrate onto which the material is extruded.

In a preferred embodiment, the device comprises a conveying band. In this case, the device is preferably configured as a permanently installed process station, especially a stacked-processes station. Such devices are especially suitable for off-site production, for example in case of manufacturing prefabricated elements.

With the conveying band, the shaped body to be produced can be moved continuously or intermittently during printing and/or extrusion of the composition and/or the workable composition. Alternatively or in combination, the shaped body to be produced can be moved continuously or intermittently to further processing stations, such as e.g. surface post-processing, cutting, curing, drying, packing and so forth.

Typically, but not necessarily, in this special embodiment the supporting unit that supports the dispensing unit is static while the conveying band is movable.

The device can be configured to have two or more dispensing units, e.g. a print head and an extrusion device. This allows for combining classical extrusion and printing with an additive manufacturing method. For example, when producing a composite element, a bottom layer, e.g. made of a load bearing element can be extruded and an insulating layer made of the composition and/or the workable composition can be printed on top with an additive manufacturing technique, or vice versa. Thereby, for example, a robotic arm supporting a print head can go back and forth while applying the insulating layer and adapt its position to the ongoing printing.

In a further preferred embodiment, the device comprises a mold and/or surface into or onto which the composition and/or the workable composition is applied with an additive manufacturing technique. The mold and/or surface are either static or movable by a moving device.

According to a further preferred embodiment, the device comprises a conveying band with integrated molds and/or shapes, especially such that at least one side of a shaped body to be produced, in particular a composite element, is defined in shape by the band. Typically, but not necessarily, in this special embodiment the supporting unit that supports the dispensing unit is static while the conveying band with the mold or surface is moved during application. In particular, the print head comprises at least one nozzle and/or extruder which allows for delivering defined amounts of the composition and/or the workable composition at a given position.

Preferably, the movement device and the delivering of the composition and/or the workable composition through the print head and/or the die are controlled by a control unit taking into account a data model of the shaped body to be produced.

In particular, in the additive manufacturing method, an individual layer is built up by selective deposition, placement or application of the composition and/or the workable composition, after which the next layer is applied in the same manner to the layer thus produced. This process is repeated until construction of the shaped body is completed.

In particular, the additive manufacturing method is an additive free space method. This means that the shaped body is formed in layers, specifically in that composition and/or the workable composition is applied only at the sites where the shaped body is to be formed. In the case of overhangs and/or hollow spaces, a supporting structure can optionally be provided. In contrast to this, for example in powder bed methods or liquid phase methods, the entire build space is typically filled, and solidification of the material is then selectively carried out at the desired sites.

In a further preferred embodiment, the invention is related to a method for producing a shaped body from a composition and/or a workable composition as described above by digital fabrication, especially by digital casting.

"Digital fabrication" is meant to be a technique which make use of controlled, especially digitally controlled, set-on-demand processes for placing the composition and/or the workable composition. This includes in particular the control of the placing of the composition and/or the workable composition depending on (i) the strength evolution of the composition and/or the workable composition, (ii) the object to be produced with the composition and/or the workable composition and/or (iii) the formwork used during production. Especially, the placing is controlled based on a data model of the object to be produced and/or on a data model of the formwork used.

"Digital casting" stands for a method of digital fabrication in which a composition and/or a workable composition as described above are casted into a formwork.

Thereby, preferably, the structure of the formwork and/or the position of the formwork are chosen depending on (i) the delivery rate of the composition and/or the workable composition, (ii) the strength evolution of the composition and/or the workable composition and/or (iii) of the object to be produced. Preferably, the process is controlled, especially digitally controlled, based on a data model of the object to be produced and/or based on a data model of the formwork.

Especially, the shaped body is produced by digital casting in a slip forming process. Thereby, the composition and/or the workable composition is poured into a movable formwork. Preferably, the movement of the formwork is controlled depending on the delivery rate and/or strength evolution the composition and/or the workable composition, or vice versa. Preferably, the process is controlled based on a data model of the object to be produced. Since for the movement of the formwork the delivery rate and/or strength evolution of the composition and/or the workable composition is taken into account, it is possible to ensure that the part of the object leaving the moving formwork has a strength high enough to support the material placed later on.

According to another preferred embodiment, for producing the shaped body, the structure or stability of the formwork is adapted with respect to the delivery rate and/or strength evolution of the composition and/or the workable composition.

In particular, when producing the shaped body, the delivery rate of the composition and/or the workable composition is controlled depending on the strength evolution of the composition and/or the workable composition and/or of the structure of the formwork. Especially the structure of the formwork is taken into account based on a data model of the formwork. This allows e.g. for using formworks having sections of different strengths.

Especially, a workable composition is produced during the additive manufacturing, the digital fabrication, digital casting, and/or extrusion process by mixing, especially by mechanical stirring, a composition as described above, which preferably is present in the form of a dry free-flowing powder, with water. Preferably, a weight proportion of water to the high-porosity material, especially the aerogel, is from 0.2 - 3.5, especially 1 - 2.2, preferably 1.4 - 1.8.

Subsequently, in additive manufacturing, the so produced workable composition is transported to the print head and placed at a predefined position.

According to another preferred method, during the additive manufacturing process a composition as described above is placed with a print head in dry state at a predefined position and subsequently treated with water, e.g. which is e.g. applied with an additional nozzle of the print head and/or with a second print head, in order to start the hardening process of the placed composition.

However, the inventive compositions and/or workable compositions can also be used in conventional application techniques. For example, the inventive compositions and/or workable compositions can be casted in molds and/or applied by spraying, e.g. for producing insulating renders and/or plasters.

A further aspect of the present invention is a device for producing a shaped body whereby, the device is configured as described above in connection with the method for producing a shaped body from a composition and/or a workable composition.

Further advantageous embodiments and combinations of features of the invention will emerge from the following exemplary embodiments and the totality of the patent claims.

### Brief description of drawings

Fig. 1 shows a robotic device while manufacturing an insulating wall of a building based on a composition according to the invention.
Fig. 2 shows two devices for manufacturing a composite element by a method according to the invention.
Fig. 3 shows a comparison between aerogel particles in original state (left side; not agglomerated) and aerogel particles in agglomerated state after processing (right side).
Fig. 4 shows a cross-section of the device used for measuring the compressive strength of aerogel particles in original state and agglomerated state.
Fig. 5 shows a perspective view of the device of Fig. 4.
Fig. 6 shows the mechanical strengths of processed (original) aerogel particles in comparison with agglomerated aerogel particles after processing. The measurement was done with the device shown in Fig. 4 and 5.

### Exemplary embodiments

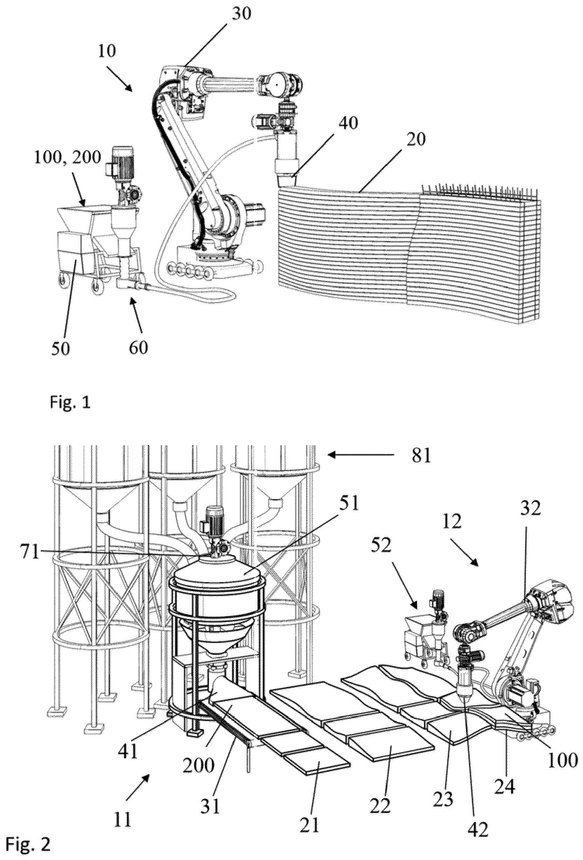

Figure 1 shows a robotic device 10 for manufacturing an insulating wall of a building 20. The device 10 shown in this example comprises a movable supporting unit 30 that is moving a print head 40 with a nozzle. The movable supporting unit 30 may be controlled by a computer control system. The device 10 is manufacturing the wall of a building 20 by adding several layers onto each other. The composition 100 that is dispensed by the dispensing unit 40 is stored in dry state in a storage container 50 comprising a transport unit 60 that is connected to the print head 40. The transport unit 60 comprises a mechanical mixing unit for mixing up the composition 100 with water in order to produce a workable composition before it is transported to the print head 40.

The composition 100 as introduced into the system is a dry composition, which is present in the form of a free-flowing powder and consists for example of:
a) 95 vol.% of a hydrophobic silica-based aerogel with a particle density of 155 kg/m³.
b) 0.5 vol.% of an organic binding promoter in the form of a powder polymer based on a block copolymer of PEG-PPG-PEG
c) 4.5 vol.% of fillers in the form of sand with a maximum particle of 1 mm.

Figure 2 illustrates a method of manufacturing substrates 21 and composite elements 22, 23 and 24, in particular architectural elements, by the use of two devices 11, 12. The first device 11 is a static extruder and the second device 12 is a 3D printer.

The first device 11 comprises a first container 51 with a mixing device 71. The first container 51 mixes several materials stored in three raw material containers 81. The so obtained mixture 200, e.g. a cementitious mortar composition, is used for producing a substrate 21. Thereby, the mixture 200 is extruded in a first step onto the movable surface 31 which is in this example realized by a conveying band that may comprise molds to produce the shape of the substrate 21 of the composite element.

The second step of the process is applying a composition 100 (which can be the same as described above) onto the substrate 21 with a second device 12. The second device 12 is in this example similar to the device 10 shown in Figure 1. It comprises a movable second supporting unit 32 that is moving a second dispensing unit 42, which is connected to a second container 52. In other words, the example shown in Figure 2 shows a combination of (i) a first manufacturing step with a static dispensing device 41 (extruder) and a movable surface 31 producing a substrate 21 from mixture 200 and (ii) a second manufacturing step with a movable dispensing device 42 (print head with adjustable nozzle) adding a layer of composition 100 onto a static surface, i.e. the substrate 21.

In the example shown here the second dispensing unit 42 is highly flexible since the addition of composition 100 on the back side of the composite element 21 is also possible.

The whole process is advantageously digitally controlled.

Figure 2 shows a substrate 21 and three different final types of composite elements 22, 23 and 24 with different shapes that can be produced with the method according to the invention.

The substrate 21 has a continuous cross-section that can be produced only by extrusion on a conveying band without molds.

The first type of the composite element 22 shown here has a more complex shape, essentially built by printing a layer with varying thickness on top of substrate 21. The second type of the composite element 23 additionally has a varying curvature achieved by using a flexible nozzle on the dispensing device 41. The forth third of the composite element 24 has a varying thickness and curvature and comprises printed layers on both surfaces. Such structures with varying thicknesses and curvatures can for example be realized by using a flexible nozzle with adjustable opening.

It will be appreciated by those skilled in the art that the present invention can be embodied in other specific forms without departing from the spirit or essential characteristics thereof. The presently disclosed embodiments are therefore considered in all respects to be illustrative and not restricting.

For example, it is possible to cover substrate 21 with composition 100 with constant thickness in order to produce a further composite element with a continuous cross-section.

Moreover, it is possible to use the first device 11 for producing a shaped body made from composition 100, if desired. Thereby, composition 100 is provided in the first container 51 and extruded onto the movable surface 31 or a conveying band, respectively. The so obtained shaped body can for example be used without further processing as an architectural element or it can be coated with a further material, e.g. a cementitious mortar composition or another composition according to the invention, with the second device 12, in order to produce a composite element.

Also, it is possible to use a transport device, e.g. a roller conveyer in the first device 11 which allows for continuously providing cardboard or paper in the region of the dispensing device 41 on the movable surface 31, such that the extruded mass is directly applied onto the cardboard or paper. Thus, in this way structures similar to gypsum wall-boards can be produced for example.

Furthermore, the inventive compositions can be applied on surfaces with standard spray equipment, especially a standard wet-mix or dry mix shotcrete equipment. Thereby, the compositions are for example conveyed through a hose and pneumatically projected at high velocity onto a surface.

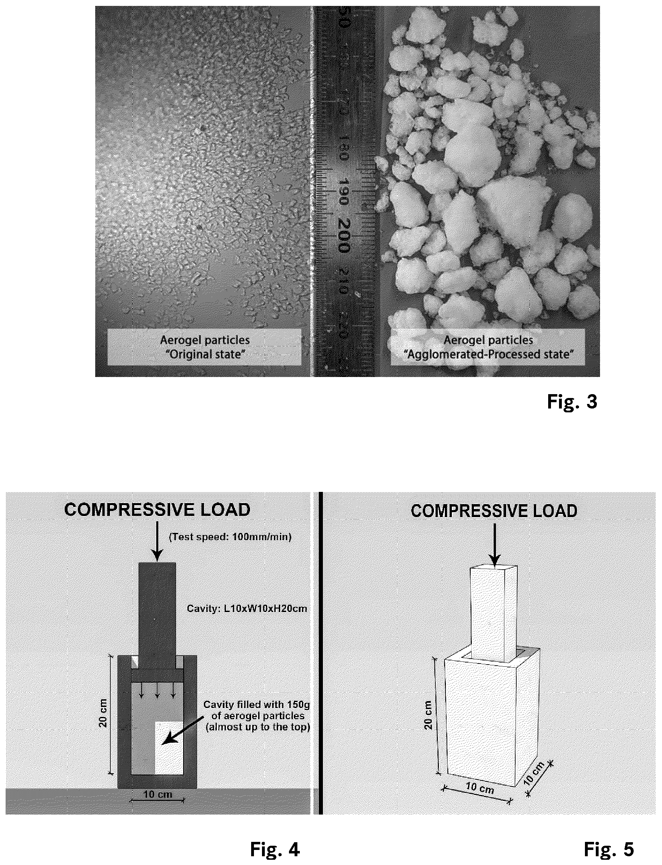

In Fig. 3 on the left side, relatively small aerogel particles as originally provided are shown. On the right side of Fig. 3, the same aerogel particles after an agglomeration process are shown. The aerogel particles in agglomerated state were obtained by premixing the original aerogel particles in the presence of a small amount of water. Subsequently, the so obtained agglomerates were dried at elevated temperatures.

As can be deduced from Fig. 3, the agglomerates have a sizes in the range of several millimeters up to several centimeters. When mixing these agglomerates with water, the weakly bonded original particles of the agglomerates will fall apart and disperse in the water at least partially.

Fig. 4 and 5 show the device used for measuring the compressive strength of the aerogel particles in original state and in agglomerated state. Specifically, the device comprises a piston which is movable in a square cylindrical cavity (10 cm × 10 cm × 20 cm). For measuring the mechanical strength, 150 g of the aerogel particles are introduced into the cavity and compress with the piston at a speed of 100 mm/min. Once the experiment was done with original particles and once with the particles in agglomerated state.

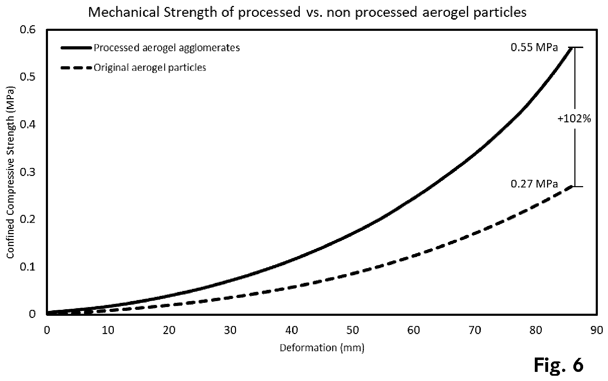

Fig. 6 shows the result of the measurement. As evident, processed aerogel particles in agglomerated state are mechanically more stable than the original granules. Specifically, the compressive strength at same deformation is about twice as high. This means that within application machines (pumps), the aerogel particles are twice as robust for withstanding high mechanical stresses during conveying (confined space of the rotostator) and spraying. Therefore, they can support higher mechanical loading before collapsing, thus better maintaining thermal insulating properties during application.

## Claims

1. Composition, in particular for use as a printable and/or extrudable mass, comprising or consisting of:
a) 10 - 99.99 vol.%, especially 60 - 99.99 vol.%, in particular 80 - 99.99 vol.%, of a high-porosity material, whereby the high-porosity material is an aerogel and/or a xerogel
b) 0.001 - 5.0 vol.% of an organic binding promoter
c) optionally, balance to 100 vol.% of further components
wherein the high-porosity material particles, most preferred aerogel particles, are present in agglomerated state, **characterized in that** the agglomerates of the high-porosity material particles have a size of 0.1 - 50 mm, especially of 0.5 - 20 mm, preferably of 0.7 - 10 mm.

2. Composition according to claim 1, whereby apart from the high-porosity material, in particular the aerogel, the volume proportion of all of the other constituents of the composition in dry state is lower than 7 vol. %, preferably lower than 3 vol.% and even more preferably lower than 1 vol.%.

3. Composition according to any of claims 1 - 2, whereby the organic binding promotor comprises or consists of a surfactant, a block co-polymer, a fluoropolymer, a cellulose ether, carbohydrate starch ether and/or a redispersible polymer.

4. Composition according to any of claims 1 - 3, whereby the composition additionally includes 0.00028 - 7.0 vol.%, especially 0.00028 - 1.4 vol.%, preferably 0.00028 - 0.28 vol.%, of an expansive agent, whereby the expansive agent is a compound, which is capable of reacting with silica and thereby generating an expansive product, especially the expansive agent is a magnesium salt, in particular magnesium oxide.

5. Composition according to any of claims 1 - 4, whereby the composition additionally includes 0.00028 - 7.0 vol.%, especially 0.00028 - 1.4 vol.%, preferably 0.00028 - 0.28 vol.%, of a curing agent, whereby the curing agent is a water retaining additive, preferably a super absorbing polymer.

6. Composition according to any of claims 1 - 5, whereby the composition comprises or consists of:
a) 80 - 99.99 vol.% of a high-porosity material, especially an aerogel
b) 0.001 - 1.0 vol.% of an organic binding promoter, especially selected from surfactants and/or redispersible polymers
c) 0.001 - 16 vol.% of fillers, especially selected from mineral aggregates
d) 0.001 - 1 vol.%, of a binder, especially a mineral binder, preferably a cementitious binder
e) optionally, 0.00028 - 0.28 vol.% of an expansive agent, especially a mineral based expansive agent
f) optionally, 0.0001 - 0.02 vol.% of a curing agent, especially a super absorbing polymer
g) optionally, 0.001 - 1 vol.%, fibers
h) optionally, balance to 100 vol.% of further components.

7. Composition according to claim 1, whereby the agglomerates comprise or consist of the high-porosity material, the binding promoter and optionally the filler.

8. Composition according to any of claims 1 - 7, whereby the composition comprises a volume proportion of the high-porosity material, in particular the aerogel, of 85 - 99.99 vol.%, most preferred 90 - 99.95 vol.%. and at the same time less than 5 vol.%, preferably less than 1 vol.%, of a mineral binder.

9. Workable mixture comprising a composition as described in any of claims 1 - 8 and water, whereby a weight proportion of water to the aerogel is from 0.2 - 3.5, especially 1 - 2.2, preferably 1.4 - 1.8.

10. Hardened composition obtainable by letting hardening a workable mixture as described in claim 9.

11. Composite element comprising a hardened composition as described in claim 10 and a substrate, especially a substrate comprising or consisting of concrete, wood, stone, rock, metal, glass, a polymeric material, glass fiber sheets, glass fiber mats, a ceramic, cardboard, paper or composites of these materials.

12. Use of a composition according to any of claim 1 - 8 or a workable composition according to claim 10 as a printable mass in additive manufacturing, especially an additive free-space method, for producing a shaped body.

13. Use of a composition according to any of claims 1 - 8, especially claim 6, or of a workable mixture according to claim 10, for producing a covering on a surface, especially for producing a render and/or a plaster on a surface, with a spray application technique, in particular with a shotcrete application technique.

14. Method for producing a shaped body from a composition according to any of claim 1 - 8 or a workable composition according to claim 9 by additive manufacturing, especially by an additive free-space method, digital casting and/or by extrusion.

## Patentansprüche

1. Zusammensetzung, insbesondere zur Verwendung als druckbare und/oder extrudierbare Masse, umfassend oder bestehend aus:
a) 10 - 99,99 Vol.-%, vorzugsweise 60 - 99,99 Vol.-%, insbesondere 80 - 99,99 Vol.-% eines hochporösen Materials, wobei das hochporöse Material ein Aerogel und/oder ein Xerogel ist
b) 0,001 - 5,0 Vol.-% eines organischen Bindungspromotors
c) gegebenenfalls Ausgleichen auf 100 Vol.-% mit weiteren Komponenten,
wobei die Patikel des hochporösen Materials, am meisten bevorzugt Aerogelpartikel, in agglomeriertem Zustand vorliegen, **dadurch gekennzeichnet, dass** die Agglomerate der Partikel des hochporösen Materials eine Größe von 0,1 - 50 mm, vorzugsweise von 0,5 - 20 mm, bevorzugt von 0,7 - 10 mm aufweisen.

2. Zusammensetzung nach Anspruch 1, wobei abgesehen von dem hochporösen Material, insbesondere dem Aerogel, der Volumenanteil aller anderen Bestandteile der Zusammensetzung in trockenem Zustand weniger als 7 Vol.-%, bevorzugt weniger als 3 Vol.-% und noch bevorzugter weniger als 1 Vol.-% beträgt.

3. Zusammensetzung nach einem der Ansprüche 1 - 2, wobei der organische Bindungspromotor ein Tensid, ein Blockcopolymer, ein Fluorpolymer, einen Celluloseether, Kohlenhydratstärkeether und/oder ein redispergierbares Polymer umfasst oder daraus besteht.

4. Zusammensetzung nach einem der Ansprüche 1 - 3, wobei die Zusammensetzung zusätzlich 0,00028 - 7,0 Vol.-%, insbesondere 0,00028 - 1,4 Vol.-%, bevorzugt 0,00028 - 0,28 Vol.-%, eines Expansionsmittels enthält, wobei das Expansionsmittel eine Verbindung ist, die in der Lage ist, mit Siliciumdioxid zu reagieren und dadurch ein Expansionsprodukt zu erzeugen, insbesondere ist das Expansionsmittel ein Magnesiumsalz, insbesondere Magnesiumoxid.

5. Zusammensetzung nach einem der Ansprüche 1 - 4, wobei die Zusammensetzung zusätzlich 0,00028 - 7,0 Vol.-%, insbesondere 0,00028 - 1,4 Vol.-%, bevorzugt 0,00028 - 0,28 Vol.-%, eines Aushärtungsmittels enthält, wobei das Aushärtungsmittel ein wasserzurückhaltendes Additiv, bevorzugt ein superabsorbierendes Polymer, ist.

6. Zusammensetzung nach einem der Ansprüche 1 - 5, wobei die Zusammensetzung umfasst oder besteht aus:
a) 80 - 99,99 Vol.-% eines hochporösen Materials, insbesondere eines Aerogels,
b) 0,001 - 1,0 Vol.-% eines organischen Bindungspromotors, insbesondere ausgewählt aus Tensiden und/oder redispergierbaren Polymeren,
c) 0,001 - 16 Vol.-% Füllstoffen, insbesondere ausgewählt aus mineralischen Aggregaten,
d) 0,001 - 1 Vol.-% eines Bindemittels, insbesondere eines mineralischen Bindemittels, bevorzugt eines zementartigen Bindemittels,
e) gegebenenfalls 0,00028 - 0,28 Vol.-% eines Expansionsmittels, insbesondere eines Expansionsmittels auf Mineralbasis,
f) gegebenenfalls 0,0001 - 0,02 Vol.-% eines Aushärtungsmittels, insbesondere eines superabsorbierenden Polymers,
g) gegebenenfalls 0,001 - 1 Vol.-% Fasern,
h) gegebenenfalls Ausgleichen auf 100 Vol.-% mit weiteren Komponenten.

7. Zusammensetzung nach Anspruch 1, wobei die Agglomerate das hochporöse Material, den Bindungspromotor und gegebenenfalls den Füllstoff umfassen oder daraus bestehen.

8. Zusammensetzung nach einem der Ansprüche 1 - 7, wobei die Zusammensetzung einen Volumenanteil des hochporösen Materials, insbesondere des Aerogels, von 85 - 99,99 Vol.-%, am meisten bevorzugt 90 - 99,95 Vol.-% und gleichzeitig weniger als 5 Vol.-%, bevorzugt weniger als 1 Vol.-%, eines mineralischen Bindemittels umfasst.

9. Verarbeitbare Mischung, umfassend eine Zusammensetzung gemäss einem der Ansprüche 1 - 8 und Wasser, wobei ein Gewichtsanteil von Wasser zu dem Aerogel von 0,2 - 3,5, insbesondere 1 - 2,2, bevorzugt 1,4 - 1,8, beträgt.

10. Gehärtete Zusammensetzung, erhältlich durch Härtenlassen einer verarbeitbaren Mischung gemäss Anspruch 9.

11. Verbundelement, umfassend eine gehärtete Zusammensetzung gemäss Anspruch 10 und ein Substrat, insbesondere ein Substrat umfassend oder bestehend aus Beton, Holz, Stein, Gestein, Metall, Glas, einem polymeren Material, Glasfaserplatten, Glasfasermatten, einer Keramik, Pappe, Papier oder Verbunden dieser Materialien.

12. Verwendung einer Zusammensetzung gemäss einem der Ansprüche 1 - 8 oder einer verarbeitbaren Zusammensetzung gemäss Anspruch 10 als druckbare Masse in der additiven Fertigung, insbesondere einem additiven Freiraumverfahren, zur Herstellung eines Formkörpers.

13. Verwendung einer Zusammensetzung gemäss einem der Ansprüche 1 - 8, insbesondere Anspruch 6, oder einer verarbeitbaren Mischung gemäss Anspruch 10, zur Herstellung eines Belags auf einer Oberfläche, insbesondere zur Herstellung eines Putzes und/oder eines Putzes auf einer Oberfläche, mit einer Sprühauftragstechnik, insbesondere mit einer Spritzbetonauftragstechnik.

14. Verfahren zur Herstellung eines Formkörpers aus einer Zusammensetzung gemäss einem der Ansprüche 1 - 8 oder einer verarbeitbaren Zusammensetzung gemäss Anspruch 9 durch additive Fertigung, insbesondere durch ein additives Freiraumverfahren, Digitalguss und/oder durch Extrusion.

## Revendications

1. Composition, en particulier pour une utilisation en tant que masse imprimable et/ou extrudable, comprenant ou consistant en :
a) 10 à 99,99 % en volume, en particulier 60 à 99,99 % en volume, en particulier 80 à 99,99 % en volume, d'un matériau à haute porosité, dans laquelle le matériau à haute porosité est un aérogel et/ou un xérogel,
b) 0,001 à 5,0 % en volume d'un promoteur de liaison organique,
c) de manière facultative, équilibrer jusqu'à 100 % en volume avec d'autres composants,
dans laquelle les particules de matériau à haute porosité, de préférence des particules d'aérogel, sont présentes à l'état aggloméré, **caractérisée en ce que** les agglomérats des particules de matériau à haute porosité ont une taille de 0,1 à 50 mm, en particulier de 0,5 à 20 mm, de préférence de 0,7 à 10 mm.

2. Composition selon la revendication 1, dans laquelle, outre le matériau à haute porosité, en particulier l'aérogel, la proportion en volume de tous les autres constituants de la composition à l'état sec est inférieure à 7 % en volume, de préférence inférieure à 3 % en volume et de manière encore plus préférentielle inférieure à 1 % en volume.

3. Composition selon l'une des revendications 1 à 2, dans laquelle le promoteur de liaison organique comprend ou consiste en un tensioactif, un copolymère séquencé, un fluoropolymère, un éther de cellulose, un éther d'amidon et/ou un polymère redispersible.

4. Composition selon l'une des revendications 1 à 3, dans laquelle la composition comprend en outre 0,00028 à 7,0 % en volume, en particulier 0,00028 à 1,4 % en volume, de préférence 0,00028 à 0,28 % en volume, d'un agent expansif, dans laquelle l'agent expansif est un composé qui est capable de réagir avec de la silice et de générer ainsi un produit expansif, en particulier l'agent expansif est un sel de magnésium, en particulier de l'oxyde de magnésium.

5. Composition selon l'une des revendications 1 à 4, dans laquelle la composition comprend en outre 0,00028 à 7,0 % en volume, en particulier 0,00028 à 1,4 % en volume, de préférence 0,00028 à 0,28 % en volume, d'un agent durcisseur, dans laquelle l'agent durcisseur est un additif retenant l'eau, de préférence un polymère superabsorbant.

6. Composition selon l'une des revendications 1 à 5, dans laquelle la composition comprend ou consiste en :
a) 80 à 99,99 % en volume d'un matériau à haute porosité, en particulier un aérogel,
b) 0,001 à 1,0 % en volume d'un promoteur de liaison organique, en particulier choisi parmi des tensioactifs et/ou des polymères redispersibles,
c) 0,001 à 16 % en volume d'enduits, en particulier choisis parmi des agrégats minéraux,
d) 0,001 à 1 % en volume d'un liant, en particulier un liant minéral, de préférence un liant cimentaire,
e) de manière facultative, 0,00028 à 0,28 % en volume d'un agent expansif, en particulier un agent expansif à base minérale,
f) de manière facultative, 0,0001 à 0,02 % en volume d'un agent durcisseur, en particulier un polymère superabsorbant,
g) de manière facultative, 0,001 à 1 % en volume de fibres,
h) de manière facultative, équilibrer jusqu'à 100 % en volume avec d'autres composants.

7. Composition selon la revendication 1, dans laquelle les agglomérats comprennent ou sont consitués du matériau à haute porosité, du promoteur de liaison et de manière facultative de l'enduit.

8. Composition selon l'une des revendications 1 à 7, dans laquelle la composition comprend une proportion en volume du matériau à haute porosité, en particulier de l'aérogel, de 85 à 99,99 % en volume, de préférence de 90 à 99,95 % en volume et en même temps inférieure à 5 % en volume, de préférence inférieure à 1 % en volume, d'un liant minéral.

9. Mélange configuré de manière à pouvoir être travaillé, comprenant une composition telle que décrite dans l'une des revendications 1 à 8 et de l'eau, dans lequel une proportion en poids de l'eau par rapport à l'aérogel est de 0,2 à 3,5, en particulier de 1 à 2,2, de préférence de 1,4 à 1,8.

10. Composition durcie configurée de manière à pouvoir être obtenue en laissant durcir un mélange configuré de manière à pouvoir être travaillé tel que décrit dans la revendication 9.

11. Élément composite comprenant une composition durcie telle que décrite dans la revendication 10 et un substrat, en particulier un substrat comprenant ou consistant en du béton, du bois, de la pierre, de la roche, du métal, du verre, un matériau polymère, des feuilles de fibres de verre, des mats de fibres de verre, une céramique, du carton, du papier ou des composites de ces matériaux.

12. Utilisation d'une composition selon l'une des revendications 1 à 8 ou d'une composition configurée de manière à pouvoir être travaillée selon la revendication 10 en tant que masse imprimable dans la fabrication additive, en particulier un procédé additif à espace libre, pour la fabrication d'un corps moulé.

13. Utilisation d'une composition selon l'une des revendications 1 à 8, en particulier la revendication 6, ou d'un mélange configuré de manière à pouvoir être travaillé selon la revendication 10, pour la fabrication d'un revêtement sur une surface, en particulier pour la fabrication d'un enduit et/ou d'un plâtre sur une surface, avec une technique d'application par pulvérisation, en particulier avec une technique d'application par projection.

14. Procédé de fabrication d'un corps moulé à partir d'une composition selon l'une des revendications 1 à 8 ou d'une composition configurée de manière à pouvoir être travaillée selon la revendication 9 par fabrication additive, en particulier par un procédé additif à espace libre, par coulée numérique et/ou par extrusion.
